# EUROPÄISCHE PATENTSCHRIFT

(11) **EP 2 356 047 B1**
(45) Veröffentlichungstag und Bekanntmachung des Hinweises auf die Patenterteilung: **24.04.2013**
(21) Anmeldenummer: 09744675.1
(22) Anmeldetag: 26.10.2009
(51) Int. Cl.: B65G 45/16

(54) **SEGMENTKÖRPER UND ABSTREIFER FÜR EINEN FÖRDERGURTABSTREIFER**
SEGMENT BODY AND SCRAPER FOR A CONVEYOR BELT SCRAPER
CORPS DE SEGMENT ET RACLE POUR UNE RACLE DE COURROIE TRANSPORTEUSE

(30) Priorität: 10.11.2008 DE 102008056662
(43) Veröffentlichungstag der Anmeldung: 17.08.2011
(73) Patentinhaber: Rema Tip Top GmbH, 85586 Poing (DE)
(72) Erfinder: PUCHALLA, Adam, 45768 Marl (DE)
(74) Vertreter: MERH-IP Matias Erny Reichl Hoffmann
(86) Internationale Anmeldenummer: PCT/EP2009/064040
(87) Internationale Veröffentlichungsnummer: WO 2010/052145

(56) Entgegenhaltungen:
- EP-A1- 0 847 942
- DE-A1- 3 644 934
- DE-A1- 3 930 204
- DE-U1- 9 416 219
- US-A- 4 036 354

## Beschreibung

Die vorliegende Erfindung betrifft einen Segmentkörper, sowie einen Segmentkörper mit Abstreifer für einen Fördergurtabstreifer, der eine einfache Montage auf dem zugehörigen Träger und eine verbesserte automatische Nachstellung des Abstreifers bei Verschleiß ermöglicht. Ferner erlaubt der Segmentkörper mit Abstreifer aufgrund seines kompakten und vereinfachten Aufbaus eine kostengünstige Herstellung.

Aus dem Stand der Technik sind eine Vielzahl von Fördergurtabstreifern bekannt. Diese dienen insbesondere zur Reinigung von Fördergurten an der Trommel oder direkt hinter der Trommel auf der Strecke während des Betriebs. Die kostengünstigste Methode zur Reinigung des Fördergurts erfolgt mechanisch, d.h. ein Abstreifer wird über ein Federelement gegen den umlaufenden Fördergurt gedrückt, wobei der anhängende Schmutz von dem Abstreifer abgetrennt und zu einer Seite hin abgeführt wird. Dabei werden je nach Anwendungszweck oder der Größe der benötigten Anpresskraft unterschiedliche Prinzipien für das Bereitstellen der Anpresskraft des Abstreifers am Fördergurt eingesetzt.

So werden häufig eine Vielzahl von elastischen Abstreifelementen über die Breite des Fördergurts eingesetzt, die während der Montage so weit in Richtung des Fördergurts vertikal verfahren werden, so dass diese sich elastisch verformen und damit eine Anpresskraft auf den Fördergurt ausüben. Die Abstreifelemente müssen jedoch an mehreren Stellen sehr aufwändig an dem Träger des Fördergurtabstreifers montiert werden, bzw. der Träger benötigt eine spezielle aufwändige Konstruktion, wodurch sich die Herstellungskosten erhöhen.

Weiterhin besteht bei diesen Abstreiferelementen, die eine Feder aus Stahl verwenden, die Gefahr, dass im Betrieb durch den Kontakt mit dem sich bewegenden Fördergurt sehr rasch deren Eigenfrequenz erreicht wird, so dass deren Einsatz auf einen bestimmten Geschwindigkeitsbereich beschränkt ist.

Eine Alternative zum Erzeugen der Anpresskraft mittels deformierbaren Abstreifelementen stellen Fördergurtabstreifer mit einem Torsionselement zur Rückstellung des Abstreifers an den Fördergurt dar, bei denen sich entweder eine Feder oder Torsionsfedern durch das vertikale Verfahren des Abstreifers in Richtung des Fördergurts über einen angelenkten Hebel verspannt und somit die Anpresskraft des Abstreifers zur Verfügung stellt. So zeigt die DE 38 31 033 C2 eine Reinigungsvorrichtung für ein Förderband, die mittels vier Torsionsfeder-Elementen, die zwischen einem Klingerhalter und einem Rohr angeordnet sind, eine eingeleitete Kraft speichert und in eine Anpresskraft für den Abstreifer umwandelt. Nachteilig bei dieser Vorrichtung ist der Umstand, dass die Anpresskraft In Abhängigkelt von den Materialeigenschaft der Torslonsfeder-Elemente variiert, was insbesondere beim Einsatz von mehreren Abstreifern über die Breite des Fördergurts zu einem ungleichmäßigen Verschleißverhalten der Abstreifer führt. Zudem benötigt der Aufbau des Abstreifers eine Vielzahl von Bauteilen, was die Montage aufwändig und die Herstellung entsprechend teuer macht.

Es ist eine Aufgabe der vorliegenden Erfindung einen verbesserten Segmentkörper zur Aufnahme eines Abstreifers für einen Fördergurtabstreifer bereitzustellen, der eine schnelle Montage an einer beliebigen Position des Segmentträgers über die gesamte Breite des Fördergurts mit geringem Aufwand und eine verlängerte Einsatzdauer bei einem gleichzeitig kompakten Aufbau ermöglicht, und der eine vereinfachte Konstruktion aufweist, wodurch der Fördergurtabstreifer kostengünstig herstellbar ist.

US 4 036 354 A offenbart einen Segmentkörper für einen Fördergurtabstreifer gemäβ dem Oberbegriff des Anspruchs 1, bei dem separate Federelemente zur Kraftübertragung vorgesehen sind, die an einem Aufnahmebereich für die Schabeblätter und dem Montagekörper befestigt sind. Der Aufnahmebereich zur Aufnahme eines Schabeblatts ist mit einem Fixierstift auf einer von zwei Längen fixiert.

DE 39 30 204 A1 offenbart eine Abstreifvorrichtung zum Reinigen von Förderbändern, mit einer unterhalb des betreffenden Förderbandes über die Bandbreite angeordneten Lagerachse für darauf mittels Halteschellen montierbare Abstreifarme mit jeweils endseitigem Schabeblatthalter für ein quer zum Förderband verlaufendes und gegen das Förderband angedrücktes Schabeblatt, wobei oberhalb der Lagerachse eine achsparallele Schwenkachse für den jeweiligen Abstreifarm angeordnet und der Abstreifarm gegen die Halteschelle federelastisch abgestützt ist, dadurch gekennzeichnet, dass der Abstreifarm mit einer Klaue die Schwenkachse formschlüssig umfasst und nach Herausdrehen des Abstreifarmes aus seiner Arbeitsstellung von der Schwenkachse trennbar ist, und daß der Abstreifarm auf seiner Unterseite ein gegen die Halteschelle abgestütztes Federelement aufweist. Der in DE 39 30 204 A1 offenbarte Segmentkör per entspricht dem Oberbegriff des Anspruchs 13.

Die Aufgabe wird erfindungsgemäß durch die Gegenstände der unabhängigen Ansprüche gelöst. Vorteilhafte Ausgestaltungen und bevorzugte Ausführungsbeispiele der Erfindung sind in den Unteransprüchen angegeben.

Der erfindungsgemäße Aufbau des Segmentkörpers für einen Fördergurtabstreifer hat den Vorteil, dass dadurch ein sehr kompakter Aufbau für den Segmentkörper erreicht werden kann. Durch die einteilige Ausbildung des Segmentkörpers ist es in Verbindung mit dem Einsatz eines Schnellspannverschlusses möglich, dass dieser mit einer sehr geringen Anzahl von Bauteilen aufgebaut werden kann, so dass die Kosten und der Montageaufwand bei der Herstellung verringert werden können.

Des Weiteren kann die eingebrachte Vorspannkraft im dem Federelement gespeichert werden und im Betrieb wieder reversibel in den Abstreifer und somit in Richtung des Fördergurtes als Anpresskraft eingeleitet werden. Weiterhin kann neben der Einstellung der Anpresskraft mittels der Dimensionierung des Federelements und dessen Werkstoffauswahl zusätzlich über die Wahl der Hebellängen zwischen dem Abstützbereich und dem Federelement, bzw. der Hebellänge zwischen dem Abstützbereich und dem Abstreifer eine Kraftverstärkung oder Kraftuntersetzung realisiert werden.

Weiterhin kann der Segmentkörper an einer beliebigen Stelle des Segmentträgers angebracht werden, so dass eine flexible Anbringung eines oder mehrerer Segmentkörper über die Länge des Segmentträgers realisiert werden kann. Die Abhängigkeit der Montageposition des Segmentkörpers über die Länge des Segmentträgers, welche bei Segmentkörpern gemäß dem Stand der Technik durch entsprechende Montagebohrungen an dem Segmentträger festgelegt ist, kann somit entfallen.

Unter einem Abstützbereich soll nicht nur ein Bereich mit beispielsweise einer stegartigen Gestaltung verstanden werden, sondern es können auch kugelartige oder zylinderartige Gestaltungen mit diesem Begriff umfasst sein. Der Abstützbereich ist derart ausgebildet, dass dieser eine gelenkartige Funktionalität von angrenzenden Bereichen realisieren kann. Weiterhin ist der Abstützbereich so ausgebildet dass eine Kraftübertragung von einem angrenzenden Bereich in einen anderen angrenzenden Bereich ermöglicht wird. Weiterhin ist der Abstützbereich derart ausgebildet, dass in Abhängigkeit von dem verwendeten Material eine elastische Verformung des Abstützbereichs unter Belastung möglich ist, und insbesondere bei der Verwendung von Kunststoffen kann der Abstützbereich derart ausgebildet sein, dass dieser unter Belastung große Formänderungen bei elastischem Materialverhalten aufweisen kann.

Vorzugsweise ist in dem Segmentkörper zumindest ein Bereich des wenigstens einen Federelements und wenigstens ein Verschleißelement im gespannten Zustand des Federelements relativ zu einer innerhalb der Innenseite des Montagekörpers liegenden Längsachse des Montagekörpers gegenüber liegend beabstandet angeordnet. Diese Anordnung erlaubt in vorteilhafter Weise die Ausbildung eines Übersetzungsmechanismus, der beispielsweise über den Abstützbereich eine Kraft von dem Federelement zu dem Abstreifer übertragen kann.

Vorzugsweise kann der Segmentkörper einen Schnellspannverschluss aufweisen. Der Einsatz eines Schnellverspannverschluss erlaubt eine schnelle Montage und Demontage des Segmentkörpers auf dem Segmentträger, wobei dieser derart angeordnet werden kann, dass eine leichte Zugänglichkeit des Schnellspannverschluss bei dessen Öffnen oder Schließen ermöglicht wird.

In einer bevorzugten Ausführungsform des Segmentkörpers kann die Breite des wenigstens einen Federelements im Wesentlichen der Breite des Montagekörpers entsprechen. Die Breite des wenigstens einen Federelements kann aber auch größer als die Breite des Montagekörpers sein. Weiterhin kann die Breite des wenigstens einen Federelements kleiner als die Breite des Montagekörpers sein.

Weiterhin kann in einem erfindungsgemäßen Segmentkörper die Dicke von wenigstens einem Federelement unterschiedlich wählbar sein. Dadurch kann die Rückstellkraft des jeweiligen Federelements über dessen Abmaße, hier die Wahl der Dicke, beeinflusst werden, so dass für unterschiedliche Anforderungen eine erste Anpassung mittels deren konstruktiven Gestaltung vorgenommen werden kann.

Vorzugsweise kann in einem Segmentkörper das Material des wenigstens einen Federelements von dem Material des Segmentkörpers verschieden sein. Dies erlaubt ebenfalls eine gezielte Steuerung der Rückstellkraft des jeweiligen Federelements, wobei diese vom Material des Federelements abhängig ist. Somit lässt sich beispielsweise ein sehr geringes oder sehr großes Ansteigen der Rückstellkraft bei einer Krafteinleitung des Federelements einstellen.

Weiterhin kann ein erfindungsgemäßer Segmentkörper wenigstens einen Schutzlappen aufweisen, der im Bereich des Montagekörpers angeordnet ist. In einer bevorzugten Ausführungsform kann der Schutzlappen an einem Längsende des Segmentkörpers angeordnet sein, so dass die Verbindung des Montagekörpers mit dem Segmentträger besonders sicher gegen eine Verschmutzung geschützt ist. Weiterhin kann in einem erfindungsgemäßen Segmentkörper die Breite von wenigstens einem Schutzlappen mindestens der Breite des Montagekörpers entsprechen, wodurch die gesamte Breite des Montagekörpers vor Verschmutzung geschützt ist.

Im Segmentkörper ist das Federelement im gespannten Zustand im Wesentlichen auf Zug beansprucht. Somit kann beispielsweise auf konstruktiv einfache Weise mittels eines Hebelmechanismus eine Kraftübersetzung oder Kraftuntersetzung realisiert werden. Weiterhin kann dadurch ein besonders geräuscharmes Betriebsverhalten des Fördergurtabstreifers realisiert werden. In einer werteren Ausführungsform kann wenigstens ein weiteres Federelement auf Druck beansprucht sein, wobei beim Einsatz eines Hebelmechanismus beispielsweise eine Umlenkung der Kräfte erfolgen kann.

Ein Segmentkörper kann aus einem elastischen Material bestehen. Der Segmentkörper kann beispielsweise aus einem Kunststoff, insbesondere aus Polyurethan, bestehen. Weiterhin kann der Segmentkörper aus einem Werkstoff bestehen, der eine, vorzugsweise elastische, Verformung zulässt und gleichzeitig die eingeleiteten dynamischen Kräfte in den Segmentkörper dämpfen kann.

Weiterhin kann in einem Segmentkörper zumindest ein Bereich des wenigstens einen Federelements im Wesentlichen angrenzend an den Außenbereich des Montagekörpers angeordnet sein. Dadurch kann eine kompakte Bauweise des Segmentkörpers realisiert werden, so dass der erforderliche Einbauraum verringert werden kann.

Vorzugsweise kann in einem Segmentkörper im Bereich der Angrenzung von Federelement und Montagekörper die Gestaltung des Federelements im Wesentlichen der Gestaltung des Montagekörpers entsprechen. Dies erlaubt in vorteilhafterweise beim Einsatz eines Hebelmechanismus die Ausbildung eines sehr kurzen Hebelarms zwischen dem Federelement und dem Aufnahmebereich, so dass eine große Kraftübersetzung erzielt werden kann.

Weiterhin kann in einem erfindungsgemäßen Segmentkörper der Montagekörper an seiner inneren Umfangsfläche wenigstens ein Verbindungselement zur formschlüssigen Verbindung des Montagekörpers mit dem Segmentträger aufweisen. So kann das Verbindungselement beispielsweise in der Art eines Stegs ausgebildet sein. Weiterhin kann das Verbindungselement beispielsweise in der Art einer Nut ausgebildet sein.

Vorzugsweise kann in einem erfindungsgemäßen Segmentkörper der Montagekörper kraftschlüssig mit dem Segmentträger verbunden sein. Somit kann beispielsweise der Montagekörper über eine Schraubverbindung mit einer entsprechend gewählten Spannkraft mit dem Segmentträger verbunden sein.

Weiterhin kann in einem erfindungsgemäßen Segmentkörper mit Abstreifer wenigstens ein Verschleißelement im Wesentlichen eine Gestaltung eines Spachtels aufweisen.

In einer bevorzugten Ausführungsform des Segmentkörpers mit Abstreifer kann wenigstens ein Verschleißelement parallel zu dessen Längssachse drehbar gelagert sein, so dass das wenigstens eine Verschleißelement umklappbar ist. Dies ermöglicht eine konstruktiv einfache Realisierung eines Verschleißelements, welches für den Reversierbetrieb geeignet ist.

Weiterhin kann in dem Segmentkörper mit Abstreifer ein Doppelaufnahmekörper mit dem Aufnahmebereich verdrehfest in Querrichtung des Montagekörpers verbunden sein. Weiterhin kann der Doppelaufnahmekörper um eine Achse parallel zur Längsachse der Montagekörpers verschwenkbar sein. Weiterhin kann in dem Doppelaufnahmekörper auf gegenüber liegenden Seiten jeweils ein Verschleißelement in Querrichtung des Montagekörpers drehbar gelagert sein. Die gegenüber liegend angeordneten Verschleißelemente können dabei derart in dem Doppelaufnahmekörper gelagert sein, dass sich diese unabhängig von einander drehen, bzw. verschwenken lassen.

Vorzugsweise kann in einem erfindungsgemäßen Fördergurtabstreifer zur Aufnahme von wenigstens einem Segmentkörper mit Abstreifer wenigstens ein Segmentkörper mit Abstreifer an dem Segmentträger verdrehfest befestigt sein.

Weiterhin kann in einem Fördergurtabstreifer der Segmentträger im äußeren Umfangsbereich mindestens eine Nut aufweisen.

In einer bevorzugten Ausführungsform des Fördergurtabstreifers kann der Segmentträger im äußeren Umfangsbereich mindestens einen Steg aufweisen, der sich von dem Segmentträger weg erstreckt.

Vorteilhafte Ausgestaltungen und weitere Details der vorliegenden Erfindung werden im Folgenden anhand verschiedener Ausführungsbeispiele mit Bezug auf schematische Figuren beschrieben.
Fig. 1 zeigt eine Seitenansicht eines Segmentkörpers mit Abstreifer für einen Fördergurtabstreifer gemäß einer ersten Ausführungsform der vorliegenden Erfindung,
Fig. 2 zeigt eine Draufsicht des Abstreifers gemäß Fig. 1,
Fig. 3 zeigt eine Schnittansicht einer ersten Ausführungsform eines Segmentträgers gemäß Fig. 1,
Fig. 4 zeigt eine Seitenansicht eines Segmentkörpers gemäß einer zweiten Ausführungsform der vorliegenden Erfindung,
Fig. 5 zeigt eine Seitenansicht eines Segmentkörpers gemäß einer zweiten Ausführungsform der vorliegenden Erfindung mit einem modifizierten Verschlusselement,
Fig. 6 zeigt eine Schnittansicht des Segmentkörpers von hinten gemäß Fig. 4,
Fig. 7 zeigt eine perspektivische Ansicht des Segmentkörpers gemäß Fig. 1,
Fig. 8 zeigt eine Seitenansicht des erfindungsgemäßen Segmentkörpers mit Abstreifer gemäß Fig. 1 im ungespannten Zustand mit einer zweiten Ausführungsform des Segmentträgers,
Fig. 9a zeigt eine Seitenansicht des erfindungsgemäßen Segmentkörpers mit Abstreifer gemäß Fig. 1 im gespannten Zustand mit der zweiten Ausführungsform des Segmentträgers,
Fig. 9b zeigt eine Schnittansicht der zweiten Ausführungsform des Segmentträgers,
Fig. 10 zeigt eine Seitenansicht des erfindungsgemäßen Segmentkörpers mit Abstreifer gemäß Fig. 1 im gespannten Zustand mit der ersten Ausführungsform des Segmentträgers,
Fig. 11a zeigt eine perspektivische Schnittansicht der ersten Ausführungsform des Segmentträgers gemäß Fig. 1,
Fig. 11b zeigt eine perspektivische Schnittansicht einer dritten Ausführungsform des Segmentträgers,
Fig. 12 zeigt eine Seitenansicht eines Segmentkörpers mit Abstreifer gemäß einer vierten Ausführungsform der vorliegenden Erfindung,
Fig. 13 zeigt eine Rückansicht des Segmentkörpers mit Abstreifer gemäß Fig. 12,
Fig. 14 zeigt eine Seitenansicht eines Segmentkörpers gemäß der Ausführungsform von Fig. 12 mit einem Doppelabstreifer,
Fig. 15 zeigt eine Seitenansicht des Segmentkörpers mit Doppelabstreifer gemäß Fig. 14 in einem gespannten Zustand,
Fig. 16 zeigt eine Seitenansicht eines Segmentkörpers gemäß Fig. 1 mit einer zweiten Ausführungsform des Doppelabstreifers der vorliegenden Erfindung,
Fig. 17 zeigt eine Draufsicht des Doppelabstreifers gemäß Fig. 16,
Fig. 18 zeigt eine Draufsicht der dritten Ausführungsform des Doppelabstreifers gemäß Fig. 16,
Fig. 19 zeigt eine Seitenansicht des Segmentkörpers mit Doppelabstreifer gemäß Fig. 16 im ungespannten Zustand,
Fig. 20 zeigt eine Seitenansicht einer vierten Ausführungsform des Doppelabstreifers,
Fig. 21 zeigt eine Seitenansicht des Segmentkörpers mit Doppelabstreifer gemäß Fig. 16 im gespannten Zustand,
Fig. 22 zeigt eine Draufsicht und eine Vorderansicht des Segmentträgers gemäß Fig. 11a,
Fig. 23 zeigt eine Seitenansicht einer fünften Ausführungsform des Abstreifers mit einer ersten Bewegungsrichtung des Fördergurts,
Fig. 24 zeigt eine Seitenansicht des Abstreifers gemäß Fig. 23 mit einer zweiten Bewegungsrichtung des Fördergurts,
Fig. 25 zeigt eine Draufsicht des Abstreifers gemäß Fig. 24,
Fig. 26 zeigt eine Seitenansicht einer sechsten Ausführungsform des Segmentkörpers mit einem Verschleißelement gemäß der vorliegenden Erfindung,
Fig. 27 zeigt eine Rückansicht des Segmentkörpers gemäß Fig. 26,
Fig. 28 zeigt eine Seitenansicht einer siebten Ausführungsform des Segmentkörpers mit Verschleißelement als Abstreifer gemäß der vorliegenden Erfindung,
Fig. 29 zeigt eine Seitenansicht des Segmentkörpers mit Verschleißelement gemäß Fig. 26 im Betrieb,
Fig. 30 zeigt eine Seitenansicht des Segmentkörpers mit Verschleißelement gemäß Fig. 26 im verschlissenen Zustand,
Fig. 31 zeigt eine Seitenansicht einer Ausführungsform des Segmentkörpers mit Verschleißelement als Abstreifer welche nicht gemäβ der vorliegenden Erfindung ist,
Fig. 32 zeigt eine Seitenansicht des Verschleißelements und eines Federelements für den Segmentkörper gemäß Fig. 31, und
Fig. 33 zeigt eine Seitenansicht eines Montagekörpers für den Segmentkörper gemäß Fig. 31.

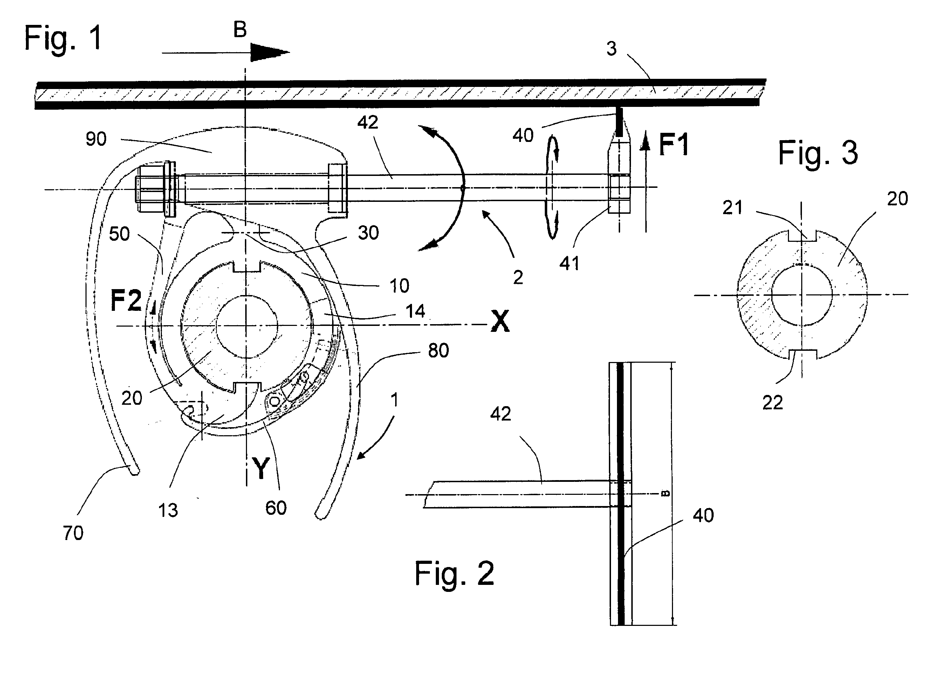

Bezugnehmend auf Fig. 1 ist schematisch ein Segmentkörper 1 mit Abstreifer 2 für einen Fördergurtabstreifer gemäß einer ersten Ausführungsform der vorliegenden Erfindung dargestellt. Der Fördergurtabstreifer wirkt im Betrieb mit einem Fördergurt 3 zusammen, dessen Untertrum sich in Richtung B bewegt. Der Segmentkörper 1 des Fördergurtabstreifers ist dabei im belasteten Zustand in einer möglichen Einbauposition dargestellt. Der Segmentkörper 1 weist in seinem Mittenbereich einen Montagekörper 10 zur Verbindung mit einem Segmentträger 20 auf. Der Montagekörper 10 umfasst einen ersten Schenkel 13 und einen zweiten Schenkel 14. Die Schenkel 13, 14 sind im Wesentlichen kreisringförmig ausgebildet und erstrecken sich im Bereich der äußeren Umfangsfläche des Segmentträgers 20, wobei sie diesen im Wesentlichen vollständig umschließen. Die beiden Schenkel 13, 14 sind weiterhin im Bereich ihrer freien Längsenden über einen Schnellspannverschluss 60 miteinander verbunden, wobei die Schenkel 13, 14 jeweils Ausnehmungen zur Verbindung mit dem Schnellspannverschluss 60 aufweisen. Der Schnellspannverschluss ist im Bereich der Unterseite des Montagekörpers 10 angeordnet.

Weiterhin weist der Segmentkörper 1 einen Aufnahmebereich 90 auf, der an dem oberen Ende des Segmentkörpers 1 ausgebildet ist. Im Bereich des linken Längsendes des Segmentkörpers 1 ist ein erster Schutzlappen 70 ausgebildet, der sich über den Montagekörper 10 erstreckt. Im Bereich des gegenüber liegenden Längsendes des Aufnahmebereichs 90 ist ein zweiter Schutzlappen 80 ausgebildet, der sich ebenfalls über den Montagekörper 10 erstreckt.

Der Segmentkörper 1 ist einteilig ausgebildet. Der Segmentkörper 1 besteht aus einem Kunststoff, vorzugsweise Polyurethan.

Der Segmentkörper 1 steht mittels seines Aufnahmebereichs 90 mit einem Abstreiferstab 42 in Kontakt, wobei der Abstreiferstab 42 in dem Aufnahmebereich 90 drehbar gelagert wird. Der Abstreiferstab 42 ist weiterhin derart in dem Aufnahmebereich 90 montiert, dass der Abstreiferstab 42 keine Bewegung in Längsrichtung ausführen kann. Weiterhin ist der Abstreiferstab 42 mittels einer Schraubverbindung mit einem Spachtelaufnehmer 41 verdrehfest verbunden, wobei im Bereich eines Längsendes des Spachtelaufnehmers 41 ein Spachtel 40 ausgebildet ist.

Fig. 2 zeigt in einer Draufsicht einen Teil des Abstreifers 2, welcher den Abstreiferstab 42, den Spachtelaufnehmer 41 und den Spachtel 40 umfasst. Die Breite des Spachtels 40 ist geringer als die Breite des Spachtelaufnehmers 41. Der Spachtel 40 besteht aus einem gehärteten Stahlwerkstoff.

Fig. 3 zeigt in einer Schnittansicht den Segmentträger 20. Dieser weist eine im Wesentlichen hohlzylindrische Gestaltung auf, wobei an dessen äußeren Umfangsbereich auf gegenüber liegenden Seiten jeweils eine Nut 21, 22 ausgebildet ist, die mit einem Formelement des Segmentkörpers 1 zusammenwirkt, so dass eine formschlüssige Verbindung entsteht. Der Segmentträger 20 besteht aus einem Stahlwerkstoff.

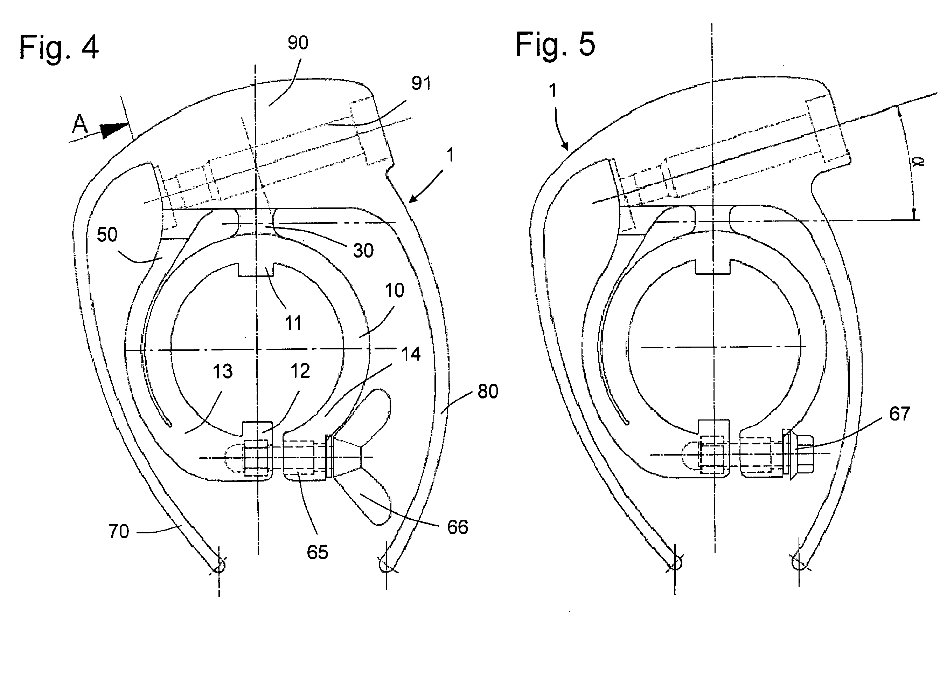

Bezugnehmend auf Fig. 4 und Fig. 5 wird jeweils eine Seitenansicht des Segmentkörpers 1 gemäß einer zweiten Ausführungsform der vorliegenden Erfindung im unbelasteten Zustand gezeigt. Die Segmentkörper 1 von Fig. 4 und Fig. 5 sind identisch, wobei jeweils unterschiedliche Verschlusselemente zur Verbindung der beiden Schenkel 13, 14 verwendet werden. So zeigt Fig. 4 den Einsatz einer Flügelschraube 66, während in Fig. 5 die Verwendung einer Sechskantschraube 67 dargestellt ist. Sowohl die Flügelschraube 66 als auch die Sechskantschraube 67 werden in einem Innengewinde 65 aufgenommen, welches im Bereich des freien Längsendes sowohl des ersten Schenkels 13 als auch des zweiten Schenkels 14 ausgebildet ist.

Der Aufnahmebereich 90 weist eine Bohrung 91 zur Aufnahme des Abstreiferstabs 42 (nicht dargestellt) auf, die sich durch den gesamten Aufnahmebereich 90 erstreckt.

Der Montagekörper 10 weist zwei Stege 11, 12 auf, die jeweils an der inneren Umfangsfläche des Montagekörpers 10 gegenüber liegend angeordnet sind, wobei der Steg 11 wiederum dem Abstützbereich 30 gegenüber liegend angeordnet ist.

Fig. 5 zeigt, wie die Bohrung 91 zur Aufnahme des Abstreiferstabes 42 (nicht dargestellt) im unbelasteten Zustand gegenüber der Horizontalen um einen Winkel α geneigt ist. Der Winkel α beträgt in einer bevorzugten Ausführungsform zwischen 20 und 45°.

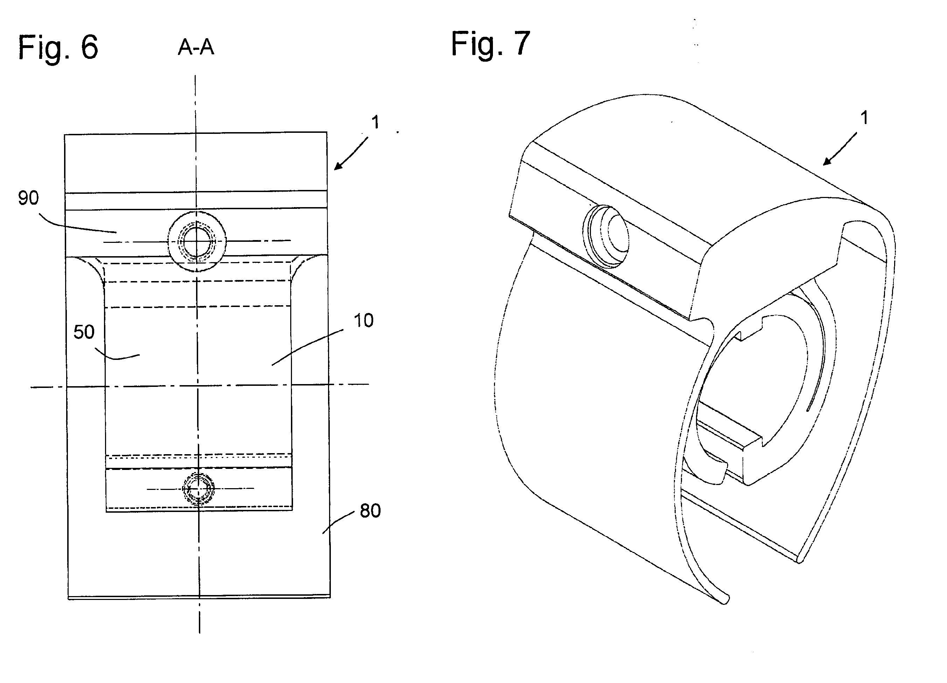

Fig. 6 zeigt den Segmentkörper 1 in einer Schnittansicht von hinten entlang der Schnittlinie A gemäß Fig. 4. Der erste Schutzlappen 70 ist dabei nicht dargestellt, während der zweite Schutzlappen 80 den Montagekörper 10 überdeckt. Das Federelement 50 ist mit dem Montagekörper 10 und dem Aufnahmebereich 90 integral ausgebildet.

Fig. 7 zeigt den Segmentkörper 1 gemäß Fig. 1 in einer perspektivischen Ansicht.

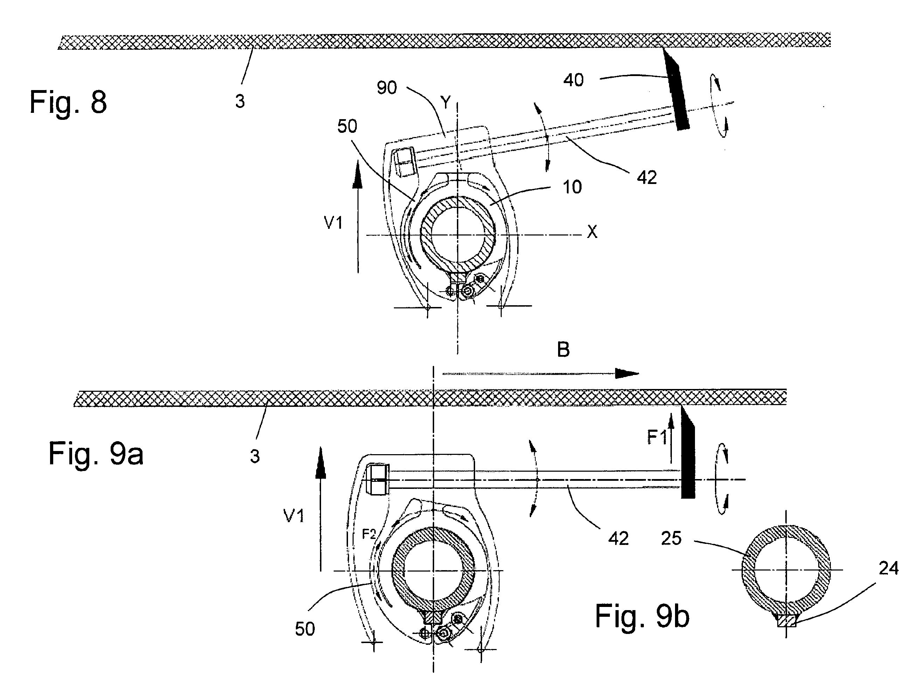

Fig. 8 zeigt eine Seitenansicht des Segmentkörpers mit Abstreifer gemäß Fig. 1 im ungespannten Zustand mit einer zweiten Ausführungsform des Segmentträgers. Der Spachtel 40 wird zum Erzeugen einer Anpresskraft zur Reinigung des Fördergurts 3 zu diesem hin verschoben, hier in Richtung V1. Sobald der Spachtel 40 mit dem Fördergurt 3 in Kontakt steht, wird eine Reaktionskraft über den Aufnahmebereich 90 des Segmentkörpers 1 in das Federelement 50 eingeleitet und darin gespeichert. Der Abstreiferstab 42 und der Spachtel 40 sind verdrehfest miteinander verbunden, wobei der Abstreiferstab 42 in dem Aufnahmebereich 90 des Segmentkörpers 1 drehbar gelagert ist. Der Aufnahmebereich 90 kann sich unter Belastung gegenüber dem Montagekörper 10 um eine Achse, die im Wesentlichen parallel zur Längsachse des Montagekörpers 10 verläuft, schwenken.

Fig. 9a zeigt eine Seitenansicht des erfindungsgemäßen Segmentkörpers mit Abstreifer gemäß Fig. 1 im gespannten Zustand. Der Fördergurt 3 bewegt sich im Betrieb in Richtung B, wobei der Spachtel 40 eine Anpresskraft F1 in Richtung des Fördergurts 3 auf dessen äußere Umfangsfläche ausübt. Aus der Anpresskraft F1 resultiert aufgrund des Kraftflusses innerhalb des Segmentkörpers 1 eine Rückstellkraft F2, die von dem Federelement 50 ausgeübt wird. Der Abstreiferstab 42 befindet sich in der dargestellten gespannten Betriebsposition in einer im Wesentlichen horizontalen Stellung, wobei auch wiederum eine geneigte Stellung bei einer weiteren Verschiebung des Fördergurtsabstreifers in Richtung V1 möglich ist.

Fig. 9b zeigt eine Schnittansicht der zweiten Ausführungsform des Segmentträgers 25, der als rohrförmiger Körper ausgebildet ist und auf seiner Unterseite einen angeschweißten Steg 24 aufweist.

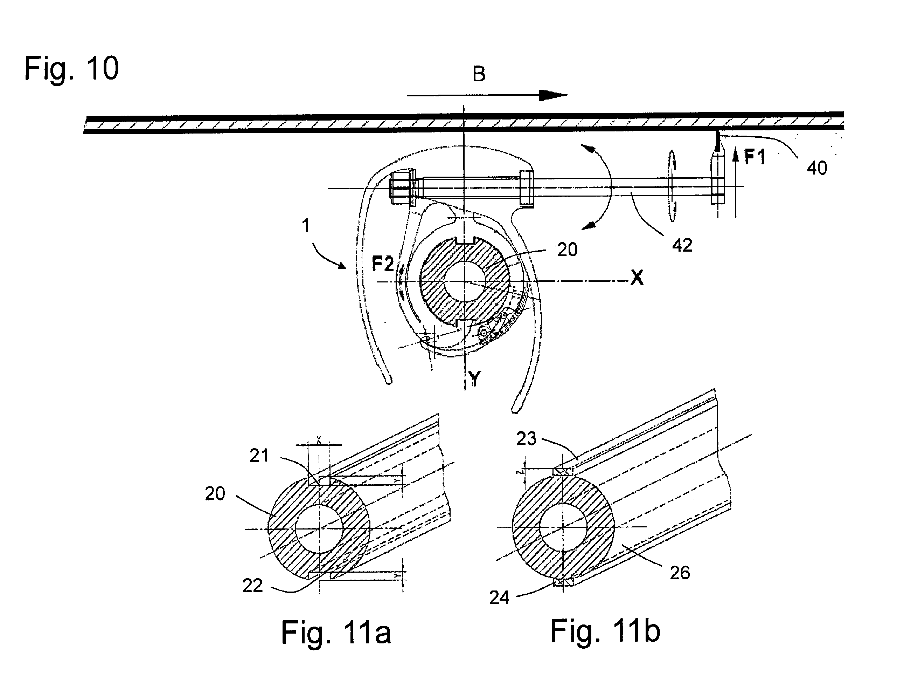

Fig. 10 zeigt eine Seitenansicht des erfindungsgemäßen Segmentkörpers mit Abstreifer gemäß Fig. 1 im gespannten Zustand mit der ersten Ausführungsform des Segmentträgers 20. Die Ausführungen zur Wirkungsweise des Segmentkörpers 1 und des angeschlossenen Abstreiferstabs 42 mit dem Spachtel 40 gelten entsprechend den vorstehend beschriebenen Ausführungen gemäß Fig. 8 und 9a.

Fig. 11a zeigt eine perspektivische Schnittansicht der ersten Ausführungsform des Segmentträgers 20 gemäß Fig. 1, wobei dieser eine im Wesentlichen rohrförmige Gestaltung aufweist. Weiterhin weist der Segmentträger 20 zwei Nuten 21, 22 auf, die am äußeren Umfangsbereich ausgebildet sind und auf gegenüber liegenden Seiten des Segmentträgers 20 angeordnet sind.

Fig. 11b zeigt eine perspektivische Schnittansicht einer dritten Ausführungsform des Segmentträgers 26, der ebenfalls eine im Wesentlichen rohrförmige Gestaltung aufweist. Der Segmentträger 26 weist zwei Stege 23, 24 auf, die sich von dem äußeren Umfangsbereich des Segmentträgers 26 weg erstrecken und auf gegenüber liegenden Seiten des Segmentträgers 26 angeordnet sind. Der Segmentträger 26 ist einteilig ausgebildet.

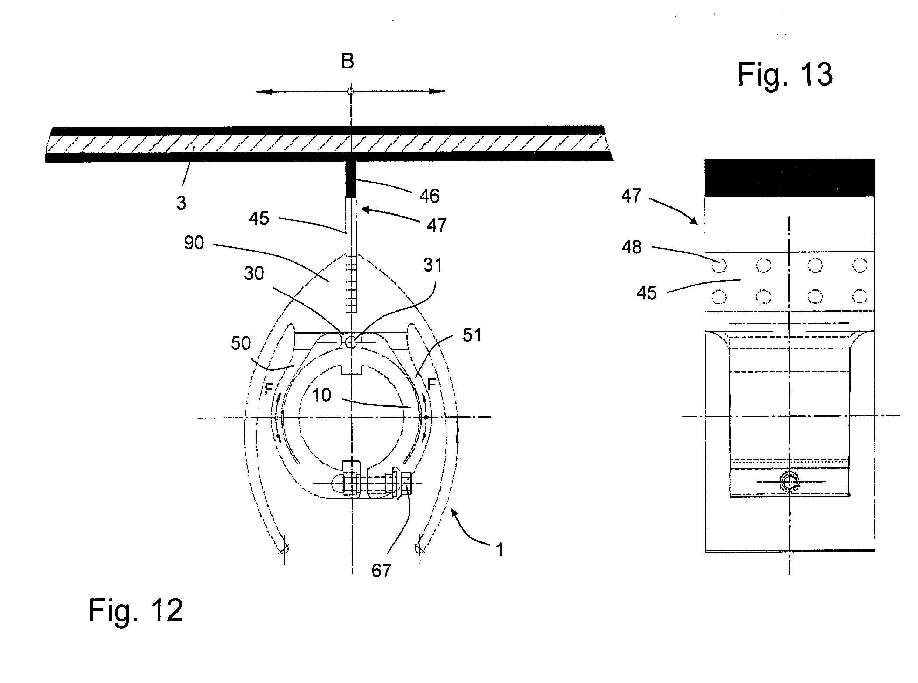

Fig. 12 zeigt eine Seitenansicht eines Segmentkörpers 1 mit einem Abstreifer 47. Der Segmentkörper 1 und der Abstreifer 47 sind derart ausgebildet, dass ein Einsatz des Fördergurtabstreifers im Reversierbetrieb des Fördergurts 3 gemäß den beiden dargestellten Bewegungsrichtungen B möglich ist. Der Abstreifer 47 besteht aus dem Spachtel 46, der auf einem Spachtelträger 45 montiert ist, wobei der Abstreifer 47 eine im Wesentlichen plattenförmige Gestaltung aufweist. Der Spachtel 46 und der Spachtelträger 45 sind einstückig ausgebildet. Der Abstreifer 47 wird in dem Aufnahmebereich 90 des Segmentkörpers 1 in einer vertikalen Einbauposition aufgenommen. Der Abstreifer 47 ist im Mittenbereich des symmetrisch ausgebildeten Aufnahmebereichs 90 angeordnet. Der Aufnahmebereich 90 und der Montagekörper 10 sind über einen Abstützbereich 30 miteinander verbunden, wobei der Abstützbereich 30 die Gestaltung in der Art eines Stegs aufweist. Der Abstützbereich 30 weist zudem in dessen Mittenbereich eine Bohrung 31 auf, die im Wesentlichen parallel zur Längsachse des Montagekörpers 10 verläuft.

Der Montagekörper 10 und der Aufnahmebereich 90 sind mit Hilfe von zwei gegenüber liegend angeordneten Federelementen 50, 51 verbunden. Im Bereich der Unterseite des Montagekörpers 10 erstrecken sich die Federelemente 50, 51 jeweils in tangentialer Richtung um den äußeren Umfangsbereich des Montagekörpers 10, wobei die Federelemente 50, 51 im unbelasteten Zustand an den äußeren Umfangsbereich des Montagekörpers 10 angrenzen, aber von diesem beabstandet angeordnet sind. Die Breite der Federelemente 50, 51 entspricht jeweils der Breite des Montagekörpers 10. Der Montagekörper 10 wird über die Sechskantschraube 67 mit dem Segmentträger 20 (nicht dargestellt) verspannt.

Fig. 13 zeigt eine Rückansicht des Segmentkörpers mit Abstreifer 47 gemäß Fig. 12. Der Abstreifer 47 wird mittels einer Vielzahl von Verbindungslöchern 48, die im Bereich der Unterseite des Spachtelträgers 45 ausgebildet sind, und entsprechend ausgebildeten Aufnahmebolzen, die im Aufnahmebereich 90 des Segmentträgers 1 angeordnet sind, mit diesem verbunden.

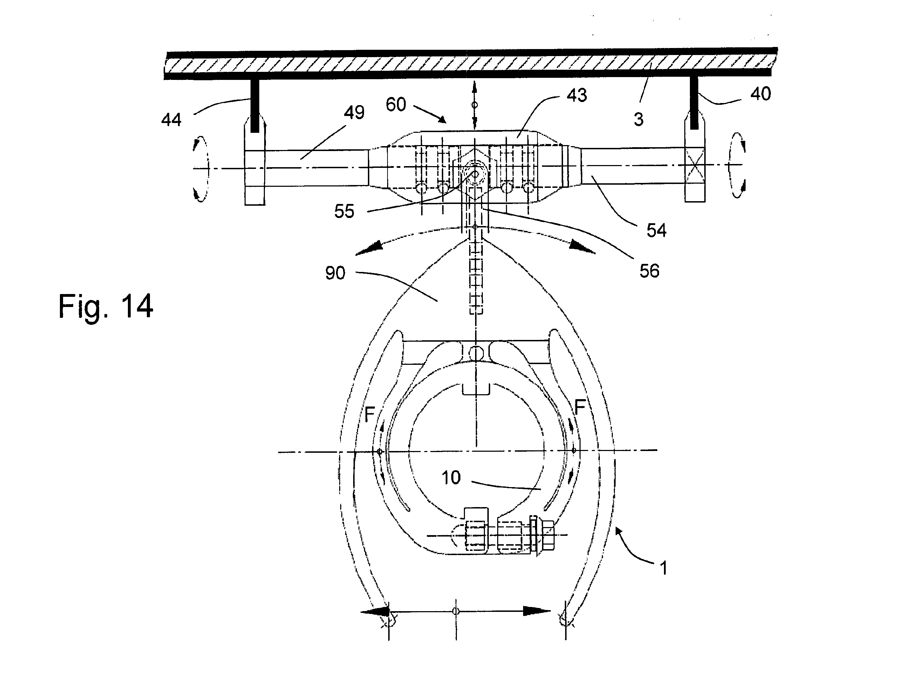

Fig. 14 zeigt eine Seitenansicht eines Segmentkörpers 1 gemäß Fig. 12, wobei ein Doppelabstreifer 60 zur zweistufigen Reinigung des Fördergurts 3 ausgebildet ist. Der Doppelabstreifer 60 besteht aus einem ersten Spachtel 44, der zur Vorreinigung des Fördergurts 3 dient, und einem zweiten Spachtel 40, der zur Hauptreinigung des Fördergurts 3 dient. Der erste Spachtel 44 ist verdrehfest auf einem ersten Dreharm 49 montiert, der wiederum drehbar in einem Aufnahmekörper 43 im Bereich von dessen Längsende gelagert ist, wobei eine Längsverschiebung des ersten Dreharms 49 nicht möglich ist. Der zweite Spachtel 40 ist verdrehfest auf einem zweiten Dreharm 54 montiert, der wiederum drehbar in dem Aufnahmekörper 43 im Bereich von dessen gegenüber liegenden Längsende gelagert ist, wobei eine Längsverschiebung des zweiten Dreharms 54 nicht möglich ist. Die beiden Spachteln 40, 44 können somit unabhängig voneinander verschwenken. Der Aufnahmekörper 43 weist eine im Wesentlichen zylindrische Gestaltung auf.

Der Doppelabstreifer 60 ist mit dem Aufnahmebereich 90 des Segmentkörpers 1 über einen Doppelabstreiferaufnehmer 56 verbunden. Der Doppelabstreiferaufnehmer 56 weist an einem Längsende einen Verbindungsstift 55 auf, der über eine entsprechend ausgebildete Bohrung in dem Aufnahmekörper 43 den Aufnahmekörper 43 aufnimmt, so dass der Doppelabstreifer 60 um den Verbindungsstift 55 verschwenkbar ist. Die Längsachse des Verbindungsstifts 55 ist dabei im Wesentlichen parallel zur Längsachse des Montagekörpers 10. Der Doppelabstreiferaufnehmer 56 ist ebenfalls für den Reversierbetrieb ausgelegt.

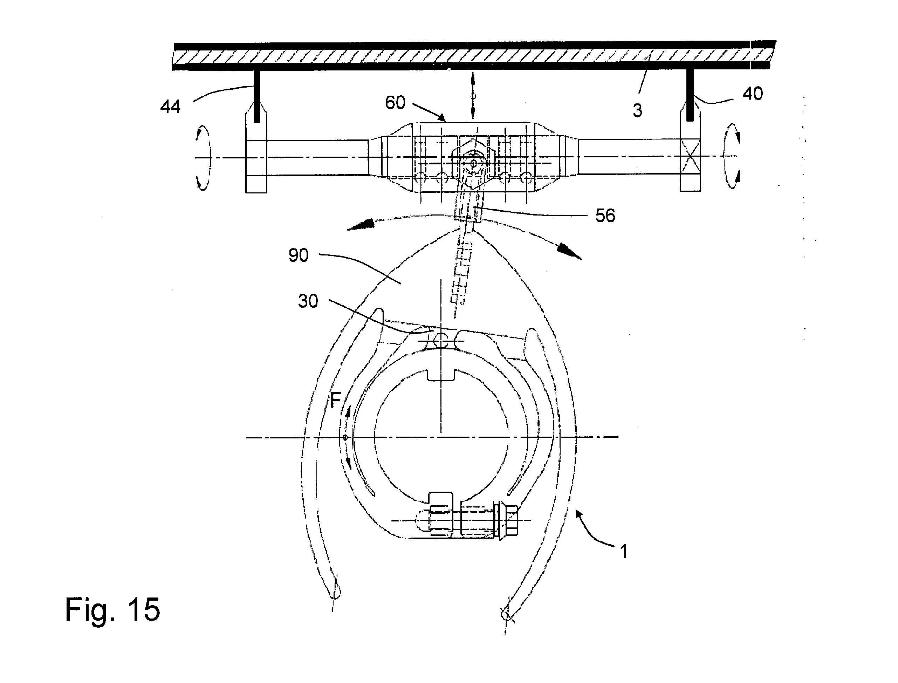

Fig. 15 zeigt eine Seitenansicht des Segmentkörpers 1 mit Doppelabstreifer 60 gemäß Fig. 14 in einem gespannten Zustand. Der Doppelabstreiferaufnehmer 56 und der Aufnahmebereich 90 des Segmentkörpers können somit unter Belastung um den Abstützbereich 30 verschwenkt werden, so dass gemäß dem vorstehend beschriebenen Kraftfluss durch das Innere des Segmentkörpers 1 jeweils ein Federelement ein Rückstellkraft aufnehmen kann.

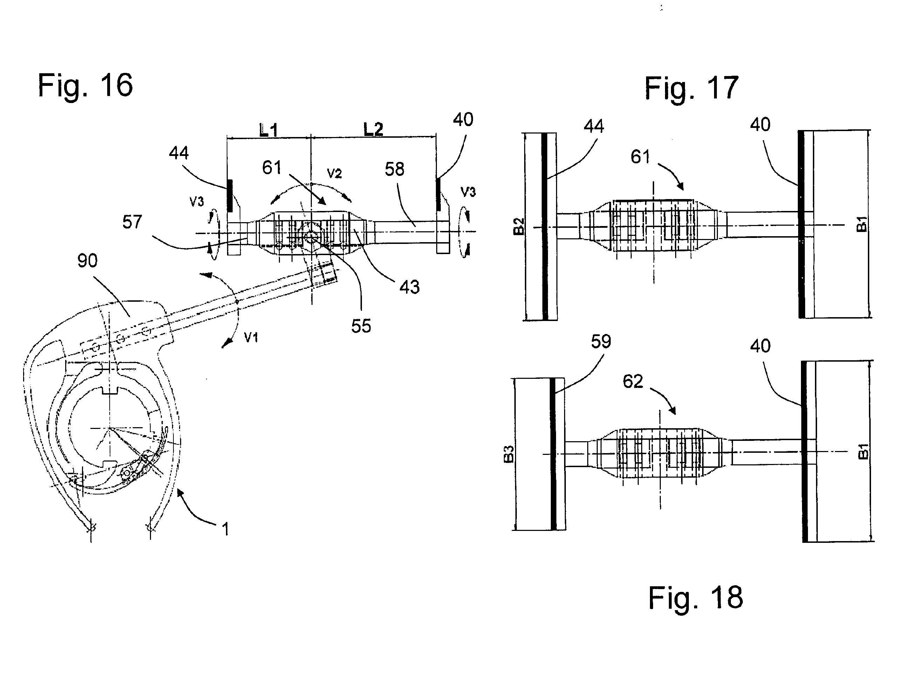

Fig. 16 zeigt eine Seitenansicht eines Segmentkörpers 1 gemäß Fig. 1 mit einem Doppelabstreifer 61, der sich gegenüber dem vorstehend beschriebenen Doppelabstreifer 60 von Fig. 14 und 15 lediglich im Hinblick auf die Längen der beiden Dreharme 57, 58 unterscheidet. Der erste Dreharm 57 weist eine Länge L1 auf, die wesentlich kürzer als die Länge L2 des zweiten Dreharms 58 ist. Die Längen L1 und L2 der Dreharm 57, 58 können so gewählt werden, dass eine unterschiedliche Anpresskraft für die beiden Spachteln 44, 40 im Betrieb realisierbar ist.

Fig. 17 zeigt eine Draufsicht des Doppelabstreifers gemäß Fig. 16, wobei die Breite B2 des ersten Spachtels 44 und die Breite B1 des zweiten Spachtels 40 identisch sind.

Fig. 18 zeigt eine Draufsicht eines Doppelabstreifers 62, wobei die Breite B3 eines ersten Spachtels 59 kleiner als die Breite B1 des zweiten Spachtels 40 ist.

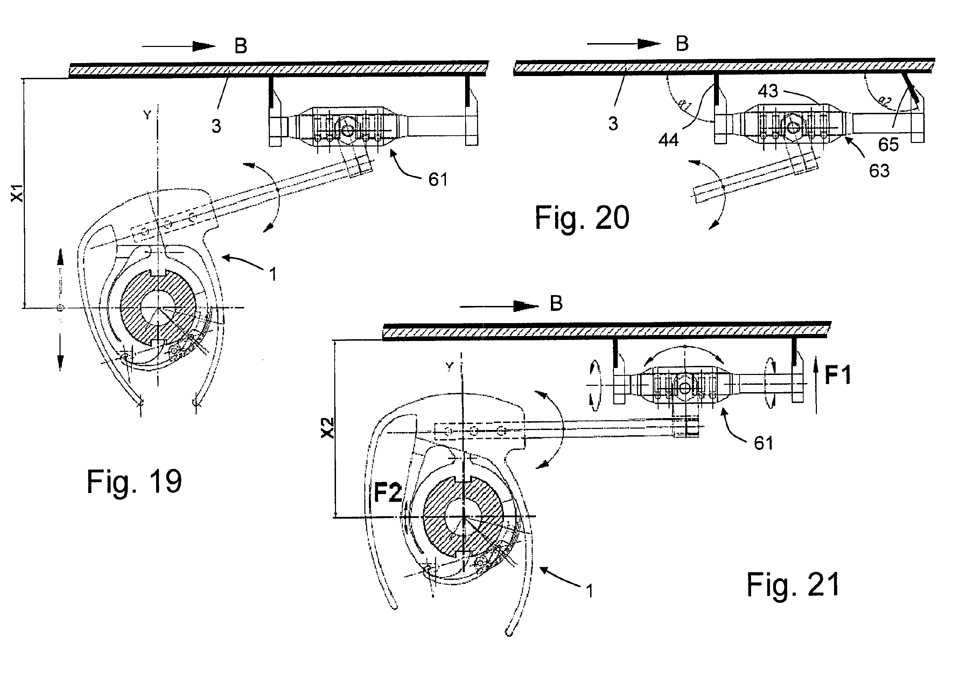

Fig. 19 zeigt eine Seitenansicht des Segmentkörpers 1 mit dem Doppelabstreifer 61 gemäß Fig. 16 im ungespannten Zustand. Der Fördergurtabstreifer wird zur Einstellung der Rückstell- und Anpresskraft in Richtung Y auf den Fördergurt 3 hin und oder von diesem weg verschoben, und ist von dem Fördergurt 3 in der dargestellten Position um die Länge X1 von diesem beabstandet.

Fig. 20 zeigt eine Seitenansicht einer vierten Ausführungsform des Doppelabstreifers 63, wobei der erste Spachtel 44 unter einem Winkel von α1 = 90° gegenüber der Längsachse des Aufnahmekörpers 43 angeordnet ist, während der zweite Spachtel 65 unter einem Winkel von α2 von weniger als 90° gegenüber der Längsachse des Aufnahmekörpers 43 angeordnet ist. Somit kann die Anpresskraft des zweiten Spachtels 65 zusätzlich mittels des Winkels α2 eingestellt werden.

Fig. 21 zeigt eine Seitenansicht des Fördergurtabstreifers mit Doppelabstreifer 61 gemäß Fig. 16 im gespannten Zustand, wobei dieser von dem Fördergurt 3 um die Länge X2 beabstandet ist.

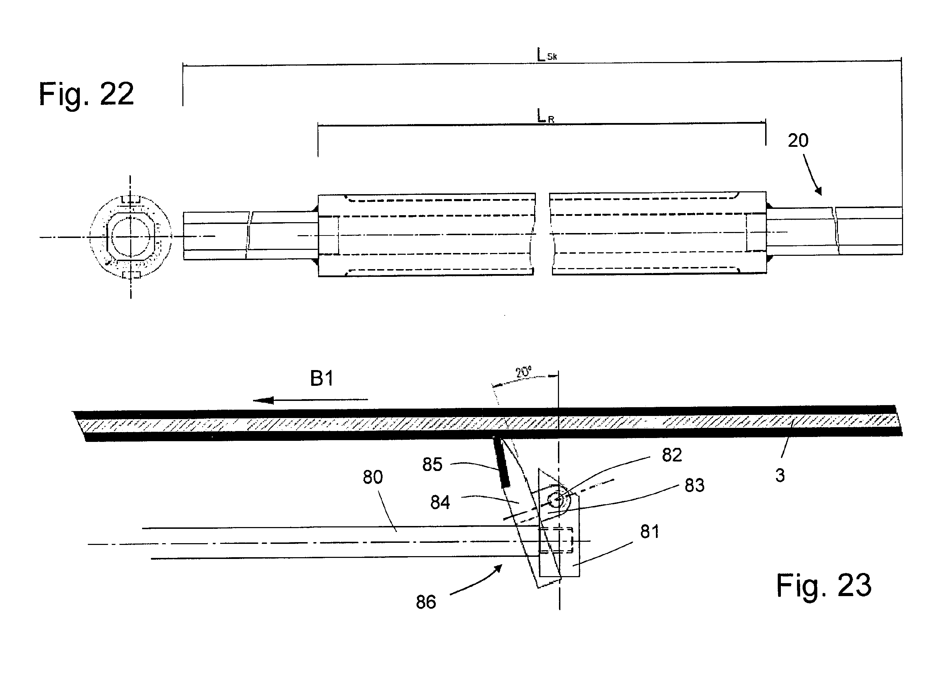

Fig. 22 zeigt eine Draufsicht und eine Vorderansicht des Segmentträgers 20 gemäß Fig. 11a, wobei dieser eine Gesamtlänge L_{SK} und einen Bereich der Länge L_{R} zur Aufnahme von Segmentkörpern aufweist.

Fig. 23 zeigt eine Seitenansicht einer fünften Ausführungsform des Abstreifers 86 mit einer ersten Bewegungsrichtung B1 des Fördergurts 3, wobei der Abstreifer 86 derart ausgebildet ist, dass der Spachtel 85 verschwenkbar ist. Der Abstreifer 86 besteht aus einem Abstreiferstab 80, der an einem Längsende ein Gewinde zur verdrehfesten Verschraubung mit einem Kupplungskörper 81 aufweist. Der Kupplungskörper 81 weist im Bereich eines Längsendes einen Bolzen 82 auf, der mit einem Spachtelverbindungsglied 83 in Kontakt steht, so dass ein Gelenk ausgebildet wird. Das Spachtelverbindungsglied 83 ist mit einem Spachtelträger 84 verbunden, an dessen Längsende der Spachtel 85 ausgebildet ist. Das freie Längsende des Spachtels 85 befindet bei einem Kontakt mit dem Fördergurt 3, der sich entlang der Bewegungsrichtung B1 bewegt, in einer Stellung, dass der Spachtelträger 84 gegenüber der Querrichtung des Fördergurts 3 um 20° gedreht ist.

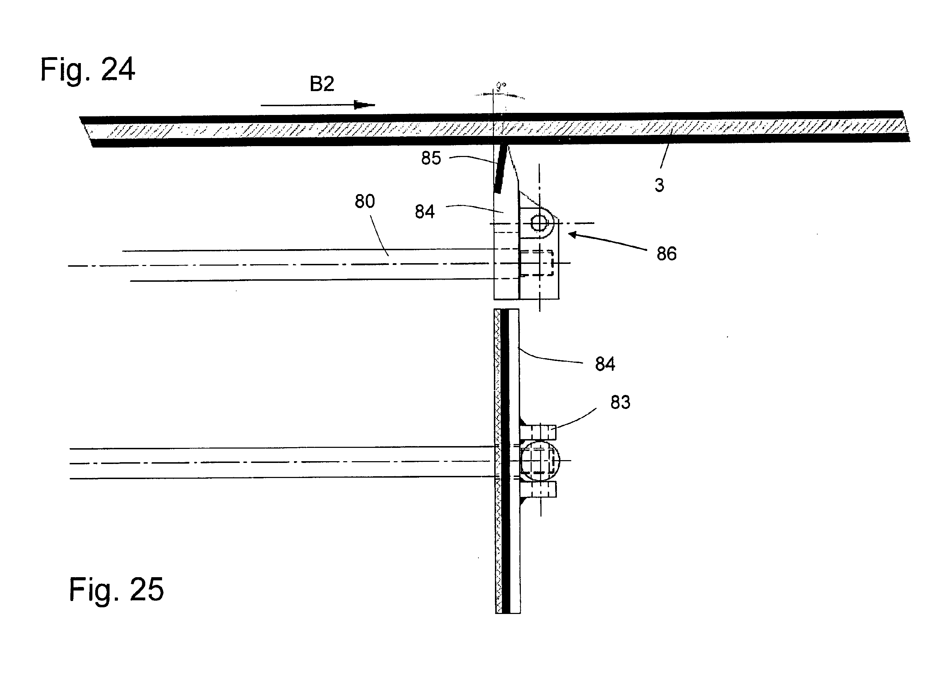

Fig. 24 zeigt eine Seitenansicht des Abstreifers 86 gemäß Fig. 23 mit einer zweiten Bewegungsrichtung B2 des Fördergurts 3, wobei der Spachtelträger 85 durch Anschlag an den Kupplungskörper 81 begrenzt wird und in einer Stellung parallel zu diesem ist. Der Spachtel 85 ist gegenüber dem Spachtelträger 84 um 9° geneigt.

Fig. 25 zeigt eine Draufsicht des Abstreifers 86 gemäß Fig. 24. Das Spachtelverbindungsglied 83 ist mit dem Spachtelträger 84 verschweißt.

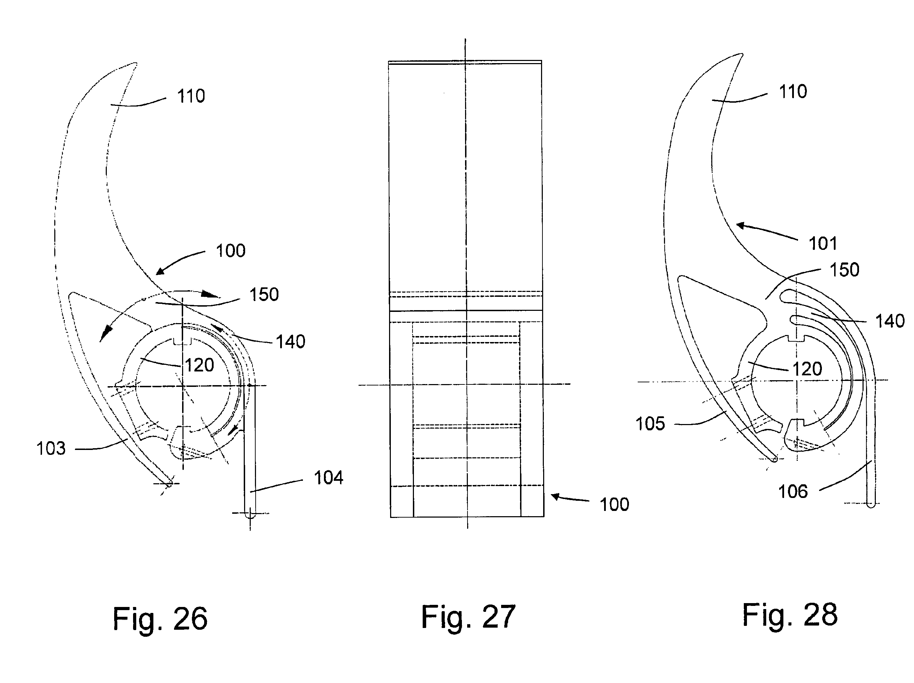

Fig. 26 zeigt eine Seitenansicht einer sechsten Ausführungsform des Segmentkörpers 100 mit einem Verschleißelement 110, das im Betrieb die Funktion eines Abstreifers realisiert. Das Verschleißelement 110 weist dabei eine gekrümmte Gestaltung auf, die im Bereich des freien Längsendes eine im Wesentlichen spitz zulaufende Gestalt aufweist. Das Verschleißelement 110 ist über einen Verformungsbereich 150 mit einem Montagekörper 120 und einem Federelement 140 einteilig verbunden. Der Segmentkörper 100 besteht vorzugsweise aus einem Kunststoff, insbesondere aus Polyurethan. Das Federelement 140 ist an seinem anderen Längsende mit dem Montagekörper 120 verbunden und zum äußeren Umfangsbereich des Montagekörpers 120 angrenzend beabstandet angeordnet. Der Montagekörper 120 weist zur formschlüssigen Verbindung mit dem Segmentträger (nicht dargestellt) auf seiner inneren Umfangsfläche zwei gegenüber liegend angeordnete Stege auf. Weiterhin weist der Segmentkörper 100 einen ersten Schutzlappen 103 auf, der mit dem Verschleißelement 110 verbunden ist und sich über den gesamten Montagekörper 120 erstreckt. Des Weiteren weist der Segmentkörper 100 einen zweiten Schutzlappen 104 auf, der tangential an das Federelement 140 ausgebildet ist und sich ebenfalls über den gesamten Montagekörper 120 erstreckt.

Fig. 27 zeigt eine Rückansicht des Segmentkörpers 100 gemäß Fig. 26.

Fig. 28 zeigt eine Seitenansicht einer siebten Ausführungsform des Segmentkörpers 101 mit dem Verschleißelement 110 als Abstreifer gemäß der vorliegenden Erfindung, wobei gegenüber der Ausführungsform gemäß Fig. 26 lediglich die Gestaltung des Verformungsbereichs 150 und dessen Verbindung mit dem Federelement 140 verschieden sind. Der Verformungsbereich 150 weist im Wesentlichen eine Gestaltung in der Art eines Stegs auf, mit dem ein Längsende des Federelements 140 verbunden ist. Der Abstand zwischen dem Federelement 140 und dem Montagekörper 120 ist in deren Verbindungsbereich größer als in der Ausführungsform gemäß Fig. 26.

Weiterhin weist der Segmentkörper 101 einen ersten Schutzlappen 105 auf, der mit dem Verschleißelement 110 verbunden ist und sich über den gesamten Montagekörper 120 erstreckt. Des Weiteren weist der Segmentkörper 101 einen zweiten Schutzlappen 106 auf, der tangential an das Verschleißelement 110 ausgebildet ist und sich über den gesamten Montagekörper 120 und das gesamte Federelement 140 erstreckt.

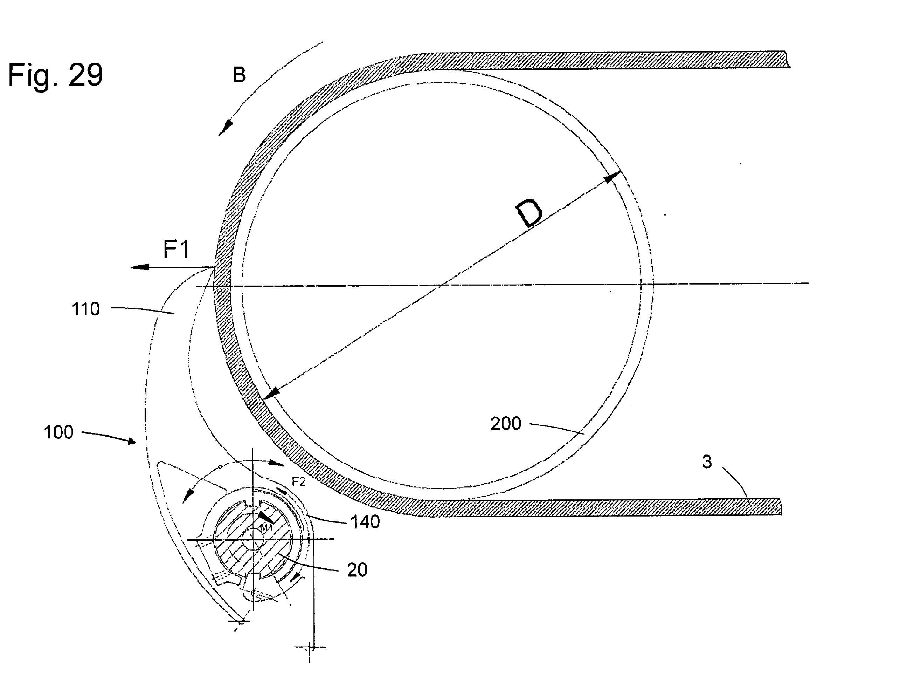

Fig. 29 zeigt eine Seitenansicht des Segmentkörpers 100 mit dem Verschleißelement 110 gemäß Fig. 26 im Betrieb, wobei das Verschleißelement 110 in einem linienförmigen Kontakt mit dem umlaufenden Fördergurt 3 steht. Der Fördergurt 3 wird von einer Trommel 200 angetrieben, die einen Durchmesser D aufweist. Das Verspannen des Verschleißelements 110 gegen den Fördergurt 3 erzeugt eine Anpresskraft F1, welche in dem Federelement 140 eine Rückstellkraft F2 hervorruft. Das Verspannen des Verschleißelements 110 erfolgt mittels eines Drehmoments M1, das über den Segmentträger 20 in den Segmentkörper 100 eingeleitet wird.

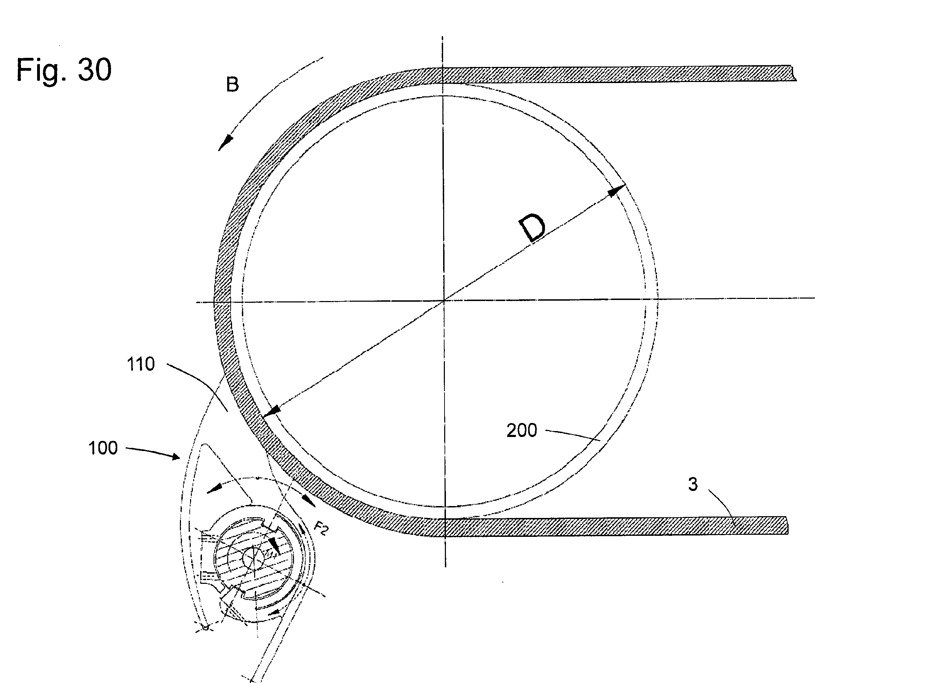

Fig. 30 zeigt eine Seitenansicht des Segmentkörpers 100 mit dem Verschleißelement 110 als Abstreifer gemäß Fig. 26 im verschlissenen Zustand. Das Verschleißelement 110 steht nun über eine Kontaktfläche mit dem Fördergurt 3 in Kontakt, wobei die Reibungskraft gegenüber dem Zustand aus Fig. 29 erhöht ist. Aufgrund der eingestellten Rückstellkraft bewegt sich das Verschleißelement 110 immer in Richtung des Fördergurts 3, so dass dessen Reinigung trotz Verschleiß sichergestellt ist.

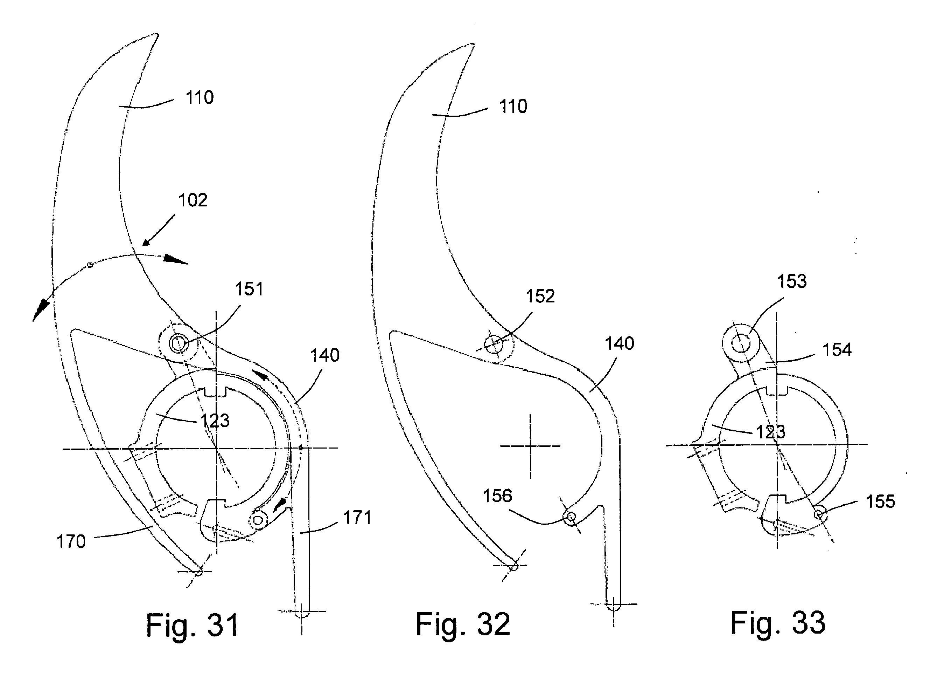

Bezugnehmend auf Fig. 31 bis 33 wird nun eine nicht zur Erfindung gehörende Ausführungsform des Segmentkörpers 102 mit dem Verschleißelement 110 beschrieben, wobei diese sich im Wesentlichen nur durch den Aufbau des Montagekörpers 123 und des Verformungsbereichs 151 von der Ausführungsform gemäß Fig. 26 unterscheidet. Der Verformungsbereich 151 ist derart ausgebildet, dass dieser eine Gelenkverbindung zwischen dem Verschleißelement 110 und dem Federelement 140 realisiert, wobei das Verschleißelement 110 und das Federelement 140 jeweils separate Bauteile sind. Der Segmentkörper 102 weist hierzu im Verformungsbereich 151 eine Bohrung 152 auf, die sich im Wesentlichen parallel zur Längsachse des Montagekörpers 123 erstreckt. Das Federelement 140 weist im Bereich eines Längsendes eine zweite Bohrung 156 auf, die über einen ersten Bolzen (nicht dargestellt) mit einer entsprechenden Verbindungsbohrung 155 im Montagekörper 123 eine Krafteinleitung von dem Montagekörper 123 in den Segmentkörper 102 realisiert. Weiterhin weist der Montagekörper 123 auf der gegenüber liegenden Seite der Verbindungsbohrung 155 einen hebelartig gestalteten Verbindungskörper 154 auf, der an seinem freien Längsende einen Gelenkverbindungsbereich 153 mit einer hohlzylindrischen Gestaltung zur Verbindung mit der Bohrung 152 des Verformungsbereichs 151 aufweist. Damit kann sich das Verschleißelement 110 unter der Wirkung der Rückstellkraft des Federelements 140 in Richtung des Fördergurts 3 (nicht dargestellt) verschwenken.

Weiterhin weist der Segmentkörper 102 einen ersten Schutzlappen 170 auf, der mit dem Verschleißelement 110 verbunden ist und sich über den gesamten Montagekörper 123 erstreckt. Des Weiteren weist der Segmentkörper 102 einen zweiten Schutzlappen 171 auf, der tangential an das Federelement 140 ausgebildet ist und sich über den gesamten Montagekörper 123 erstreckt.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen.

## Patentansprüche

1. Segmentkörper (1) für einen Fördergurtabstreifer, mit
- einem Montagekörper (10), der mit einem Segmentträger (20) verdrehfest verbindbar ist,
- einem Aufnahmebereich (90), der zur krafteinleitenden Aufnahme von wenigstens elnem Verschleißelement (40) ausgebildet ist,
wobei ein Abstützbereich (30) den Aufnahmebereich (90) mit dem Montagekörper (10) gelenkartig verbindet, und
zwischen dem Aufnahmebereich (90) und Montagekörper (10) wenigstens ein Federelement (50) vorgesehen ist, das mit dem Montagekörper (10) und dem Aufnahmebereich (90) derart zusammenwirkt, dass eine Kraft von dem wenigstens einen Federelement (50) zu dem Aufnahmebereich (90) übertragbar ist; wobei zumindest ein Bereich des wenigstens einen Federelements (50) und wenigstens ein Verschleißelement (40) im gespannten Zustand des Federelements (50) relativ zu einer innerhalb der Innenseite des Montagekörpers (10) liegenden Längsachse des Montagekörpers (10) gegenüber liegend beabstandet derart angeordnet sind, dass das Federelement (50) im gespannten Zustand auf Zug beansprucht ist, **dadurch gekennzeichnet, dass** der Aufnahmebereich (90), der Montagekörper (10), der Abstützbereich (30) und das Federelement (50) einstückig ausgebildet sind.

2. Segmentkörper nach Anspruch 1, **dadurch gekennzeichnet, dass** dieser einen Schnellspannverschluss (60) aufweist.

3. Segmentkörper nach zumindest einem der Ansprüche 1-2, **dadurch gekennzeichnet, dass** die Breite des wenigstens einen Federelements (50) im Wesentlichen der Breite des Montagekörpers (10) entspricht.

4. Segmentkörper nach zumindest einem der Ansprüche 1-3, **dadurch gekennzeichnet, dass** die Dicke des wenigstens einen Federelements (50) unterschiedlich wählbar ist,

5. Segmentkörper nach zumindest einem der Ansprüche 2-4, **dadurch gekennzeichnet, dass** das Material des wenigstens einen Federelements (50) von dem Material des Segmentkörpers (1) verschieden ist.

6. Segmentkörper nach zumindest einem der Ansprüche 1-5, **dadurch gekennzeichnet, dass** dieser wenigstens einen Schutzlappen (70, 80) aufweist, der im Bereich des Montagekörpers (10) angeordnet ist.

7. Segmentkörper mit Abstreifer (2), wobei dieser wenigstens einen Segmentkörper (1) für einen Fördergurtabstreifer nach zumindest einem der Ansprüche 1-6 umfasst, **dadurch gekennzeichnet, dass** der Abstreifer (2) wenigstens ein Verschleißelement (40) mit im Wesentlichen der Gestaltung eines Spachtels aufweist.

8. Segmentkörper mit Abstreifer (2) nach Anspruch 7, **dadurch gekennzeichnet, dass** das wenigstens eine Verschleißelement (40) parallel zu dessen Längssachse drehbar gelagert ist, so dass das wenigstens eine Verschleißelement (40) umklappbar ist.

9. Segmentkörper mit Abstreifer (2) nach Anspruch 7 oder 8, **dadurch gekennzeichnet, dass** ein Doppelaufnahmekörper (43) mit dem Aufnahmebereich (90) verdrehfest in Querrichtung des Montagekörpers (10) verbunden ist, und der Doppelaufnahmekörper (43) um eine Achse parallel zur Längsachse der Montagekörpers (10) verschwenkbar ist, und in dem Doppelaufnahmekörper (43) auf gegenüber liegenden Seiten Jeweils ein Verschleißelement (40, 44) in Querrichtung des Montagekörpers (10) drehbar gelagert ist.

10. Fördergurtabstreifer zur Aufnahme von wenigstens einem Segmentkörper mit Abstreifer (2) nach zumindest einem der Ansprüche 7-9, **dadurch gekennzeichnet, dass** der wenigstens eine Segmentkörper mit Abstreifer (2) an dem Segmentträger (20) verdrehfest befestigt ist.

11. Fördergurtabstreifer nach Anspruch 10, **dadurch gekennzeichnet, dass** der Segmentträger (20) im äußeren Umfangsbereich mindestens eine Nut (21, 22) aufweist.

12. Fördergurtabstreifer nach Anspruch 10 oder 11, **dadurch gekennzeichnet, dass** der Segmentträger (20) Im äußeren Umfangsbereich mindestens einen Steg (23, 24) aufweist, der sich von dem Segmentträger (20) weg erstreckt.

13. Segmentkörper (100; 101; 102), mit
- einem Montagekörper (120), der mit einem Segmentträger (20) verdrehfest verbindbar ist,
- einem Verschleißelement (110), das mittels eines Verformungsbereichs (150) gelenkartig mit dem Montagekörper (120) verbunden ist, und einem Federelement (140), **dadurch gekennzeichnet, dass** das wenigstens eine Federelement (140) mit dem Montagekörper (120), dem Verformungsbereich (150) und dem Verschleißelement (110) einstückig ausgebildet ist und im gespannten Zustand eine Kraft zum Verschleißelement (110) überträgt, und
zumindest ein Bereich des wenigstens einen Federelements (140) und das Verschleißelement (110) Im gespannten Zustand des wenigstens einen Federelements (140) relativ zu einer innerhalb der Innenseite des Montagekörpers (120; 123) liegenden Längsachse des Montagekörpers (120; 123) gegenüber liegend beabstandet derart angeordnet sind, dass das Federelement (140) im gespannten Zustand auf Zug beansprucht ist.

## Claims

1. A segment body (1) for a conveyor belt scraper, comprising
- a mounting body (10) that can be connected to a segment carrier (20) in a rotationally fixed manner,
- a holding portion (90) that is designed for applying force from at least one wear element (40),
wherein a support portion (30) connects the holding portion (90) to the mounting body (10) In an articulated manner, and
at least one spring element (50) is provided between the holding portion (90) and the mounting body (10), which interacts with the mounting body (10) and the holding portion (90) in such a way that a force can be transmitted from the at least one spring element (50) to the holding portion (90); wherein at least one portion of the at least one spring element (50) and at least one wear element (40) in the tensioned state of the spring element (50) are oppositely disposed relative to a longitudinal axis of the mounting body (10) located inside the inner side of the mounting body (10) so that they are spaced apart such that the spring element (50) in the tensioned state is subjected to tension, **characterized in that** the holding portion (90), the mounting body (10), the support portion (30), and the spring element (50) are integrally formed.

2. The segment body according to claim 1, **characterized in that** the segment body has a quick release clamp (60).

3. The segment body according to at least one of claims 1 to 2, **characterized in that** the width of the at least one spring element (50) substantially corresponds to the width of the mounting body (10).

4. The segment body according to at least one of claims 1 to 3, **characterized in that** the thickness of the at least one spring element (50) can be selected differently.

5. The segment body according to at least of claims 2 to 4, **characterized in that** the material of the at least one spring element (50) is different from the material of the segment body (1).

6. The segment body according to at least one of claims 1 to 5, **characterized In that** the segment body has at least one protective flap (70, 80) arranged at a portion of the mounting body (10).

7. A segment body comprising a scraper (2), comprising at least one segment body (1) for a conveyor belt scraper according to claims 1 to 6, **characterized in that** the scraper (2) has at least one wear element (40) substantially having the design of a spatula.

8. The segment body comprising a scraper (2) according to claim 7, **characterized In that** the at least one wear element (40) is rotatably supported parallel to the longitudinal axis thereof so that the at least one wear element (40) can be folded down.

9. The segment body comprising a scraper (2) according to claim 7 or 8, **characterized in that** a double holding body (43) is connected to the holding portion (90) so as to be rotationally fixed in the transverse direction of the mounting body (10), and the double holding body (43) can be pivoted about an axis parallel to the longitudinal axis of the mounting body (10), and in the double holding body (43) a respective wear element (40, 44) is supported on opposite sides so as to be rotatable in the transverse direction of the mounting body (10).

10. A conveyor belt scraper for receiving at least one segment body with the scraper (2) according to at least one of claims 7 to 9, **characterized In that** the at least one segment body with the scraper (2) is attached to the segment carrier (20) In a rotationally fixed manner.

11. The conveyor belt scraper according to claim 10, **characterized in that** the segment carrier (20) has at least one groove (21, 22) in the outer circumferential portion.

12. The conveyor belt scraper according to claim 10 or 11, **characterized in that** the segment carrier (20) has at least one bar (23, 24) in the outer circumferential portion which extends away from the segment carrier (20).

13. A segment body (100; 101; 102) comprising
- a mounting body (120) that can be connected to a segment carrier (20) in a rotationally fixed manner, and
- a wear element (110) that is connected to the mounting body (120) in an articulated manner by means of a deformable portion (150), and a spring element (140), **characterized in that** the at least one spring element (140) is integrally formed with the mounting body (120), the deformable portion (150), and the wear element (110) and in a tensioned state transmits a force to the wear element (110), and
at least one portion of the at least one spring element (140) and the wear element (110) in a tensioned state of the at least one spring element (140) are oppositely disposed relative to a longitudinal axis of the mounting body (120; 123) located inside the inner side of the mounting body (120; 123) such that the spring element (140) in the tensioned state is subjected to tension.

## Revendications

1. Corps de segment (1) pour racle à courroie transporteuse, comportant
- un corps de montage (10) susceptible d'être relié solidairement en rotation à un support de segment (20),
- une zone de réception (90) qui est réalisée pour recevoir au moins un élément d'usure (40) en y appliquant une force,
une zone d'appui (30) reliant avec articulation la zone de réception (90) au corps de montage (10), et
au moins un élément formant ressort (50) étant prévu entre la zone de réception (90) et le corps de montage (10), qui coopère avec le corps de montage (10) et avec la zone de réception (90) de manière à pouvoir transmettre une force depuis ledit au moins un élément formant ressort (50) à ladite zone de réception (90), au moins une zone dudit au moins un élément formant ressort (50) et au moins un élément d'usure (40) étant agencés à distance et en vis-à-vis l'un de l'autre par rapport à un axe longitudinal du corps de montage (10) situé à l'intérieur de la face intérieure du corps de montage (10), de telle sorte que l'élément formant ressort (50) est sollicité en traction dans l'état tendu, **caractérisé en ce que** la zone de réception (90), le corps de montage (10), la zone d'appui (30) et l'élément formant ressort (50) sont réalisés d'un seul tenant.

2. Corps de segment selon la revendication 1, **caractérisé en ce que** celui-ci comprend une fermeture à serrage rapide (60).

3. Corps de segment selon l'une au moins des revendications 1 - 2, **caractérisé en ce que** la largeur dudit au moins un élément formant ressort (50) correspond sensiblement à la largeur du corps de montage (10).

4. Corps de segment selon l'une au moins des revendications 1 - 3, **caractérisé en ce que** l'épaisseur dudit au moins un élément formant ressort (50) peut être choisie de façon variable.

5. Corps de segment selon l'une au moins des revendications 2 - 4, **caractérisé en ce que** le matériau dudit au moins un élément formant ressort (50) diffère du matériau du corps de segment (1).

6. Corps de segment selon l'une au moins des revendications 1 - 5, **caractérisé en ce que** celui-ci comprend au moins une patte de protection (70, 80) qui est agencée au niveau du corps de montage (10).

7. Corps de segment à racle (2), comprenant au moins un corps de segment (1) pour racle à courroie transporteuse selon l'une au moins des revendications 1 - 6, **caractérisé en ce que** la racle (2) comprend au moins un élément d'usure (40) présentant sensiblement la configuration d'une spatule.

8. Corps de segment à racle (2) selon la revendication 7, **caractérisé en ce que** ledit au moins un élément d'usure (40) est monté en rotation parallèlement à son axe longitudinal, de telle sorte que ledit au moins un élément d'usure (40) est rabattable.

9. Corps de segment racle (2) selon la revendication 7 ou 8, **caractérisé en ce qu'**un corps de réception double (43) est relié solidairement en rotation à la zone de réception (90) en direction transversale du corps de montage (10), et le corps de réception double (43) est susceptible de pivoter autour d'un axe parallèlement à l'axe longitudinal du corps de montage (10), et dans le corps de réception double (43), sur des côtés opposés, un élément d'usure respectif (40, 44) est monté en rotation en direction transversale du corps de montage (10).

10. Racle à courroie transporteuse destinée à recevoir au moins un corps de segment à racle (2) selon l'une au moins des revendications 7 - 9, **caractérisée en ce que** ledit au moins un corps de segment à racle (2) est fixé solidairement en rotation audit support de segment (20).

11. Racle à courroie transporteuse selon la revendication 10, **caractérisée en ce que** le support de segment (20) présente au moins une rainure (21, 22) dans la zone périphérique extérieure.

12. Racle à courroie transporteuse selon la revendication 10 ou 11, **caractérisée en ce que** le support de segment (20) présente au moins une nervure (23, 24) dans la zone périphérique extérieure, qui va en s'éloignant du support de segment (20).

13. Corps de segment (100 ; 101 ; 102) comportant
- un corps de montage (120) susceptible d'être relié solidairement en rotation à un support de segment (20),
- un élément d'usure (110) qui est relié avec articulation au corps de montage (120) au moyen d'une zone de déformation (150), et
un élément formant ressort (140),
**caractérisé en ce que** ledit au moins un élément formant ressort (140) est réalisé d'un seul tenant avec le corps de montage (120), la zone de déformation (150) et l'élément d'usure (110), et, dans état tendu, il transmet une force à l'élément d'usure (110), et
dans l'état tendu dudit au moins un élément formant ressort (140), au moins une zone dudit au moins un élément formant ressort (140) et l'élément d'usure (40) sont agencés à distance et en vis-à-vis l'un de l'autre par rapport à un axe longitudinal du corps de montage (120 ; 123) situé à l'intérieur de la face intérieure du corps de montage (120 ; 123), de telle sorte que l'élément formant ressort (140) est sollicité en traction dans l'état tendu.
